# EUROPÄISCHE PATENTSCHRIFT

(11) **EP 2 025 028 B1**
(45) Veröffentlichungstag und Bekanntmachung des Hinweises auf die Patenterteilung: **26.08.2009**
(21) Anmeldenummer: 07701324.1
(22) Anmeldetag: 14.02.2007
(51) Int. Cl.: H01M 8/04

(54) **VERFAHREN ZUM REGELN DES DRUCKS IN EINER ANODE EINER BRENNSTOFFZELLE UND BRENNSTOFFZELLE**
PROCESS TO CONTROL PRESSURE IN THE ANODE OF A FUEL CELL AND FUEL CELL
PROCEDE DE REGLAGE DE LA PRESSION DANS UNE ANODE D'UNE PILE A COMBUSTIBLE ET PILE A COMBUSTIBLE

(30) Priorität: 05.05.2006 AT 7822006
(43) Veröffentlichungstag der Anmeldung: 18.02.2009
(73) Patentinhaber: Fronius International GmbH, 4643 Pettenbach (AT)
(72) Erfinder: WAHLMÜLLER, Ewald, 4020 Linz (AT); RIFFELSBERGER, Christian, 4609 Thalheim/Wels (AT); RUMPL, Werner, 4616 Weisskirchen (AT)
(74) Vertreter: Sonn & Partner Patentanwälte
(86) Internationale Anmeldenummer: PCT/AT2007/000080
(87) Internationale Veröffentlichungsnummer: WO 2007/128007

(56) Entgegenhaltungen:
- WO-A-20/05024984
- US-A1- 2004 229 087
- US-A1- 2006 073 363

## Beschreibung

Die Erfindung betrifft ein Verfahren zum Regeln eines Drucks in einer Anode einer Brennstoffzelle, wobei der Anode über eine Zuführ-Druckregeleinheit Wasserstoff zugeführt wird und der Kathode Sauerstoff oder Luft zugeführt wird und über eine Ableitung aus der Anode über eine Austrag-Druckregeleinheit periodisch ein Gemisch aus einem Gasanteil und einem Kondensat ausgetragen und in einem Sammelbehälter gesammelt und getrennt wird, und der Gasanteil über eine Rückführleitung mit einer Rückführ-Druckregeleinheit an die Anode rückgeführt wird.

Die Erfindung bezieht sich auf ein Brennstoffzellensystem, dessen Wirkungsgrad möglichst hoch sein soll. Dazu ist es erforderlich, die Zellspannung der einzelnen Brennstoffzellen, in welchen der Wasserstoff mit dem Sauerstoff reagiert, möglichst auf ihrem maximalen Wert konstant zu halten. Dazu ist es erforderlich, den in die Anode der Brennstoffzelle zugeführten Wasserstoff teilweise periodisch auszutragen, das so genannte Purgen. Damit der ausgetragene Wasserstoff, eigentlich ein Gemisch (Purge) aus Wasserstoff, Reaktionswasser und Inertgasen, nicht ungenutzt ausgetragen wird und somit den Wirkungsgrad verschlechtert, wird dieser in einem Behälter gesammelt. In diesem Behälter wird insbesondere der Wasserstoff vom Gemisch bzw. Reaktionswasser getrennt, so dass der gasförmige Anteil des Purge, sprich der Wasserstoff, wieder in die Brennstoffzelle rückgeführt werden kann.

Zur Realisierung dieser Rückführung sind aus dem Stand der Technik mehrere Verfahren bekannt.

Aus der US 2005/0142400 A1 ist ein Verfahren bekannt, mit dem aus der Brennstoffzelle ausgetragener Wasserstoff wieder in die Brennstoffzelle rückgeführt wird. Dies erfolgt derart, dass ein Gemisch aus Wasser und Inertgasen aus der Anode in einen Tank ausgetragen wird. Die Inertgase beinhalten auch Wasserstoff, welcher wieder in die Anode rückgeführt werden soll. Hierzu wird die Wasserstoffzuführung gestoppt und aufgrund des im Tank vorhandenen Drucks der Wasserstoff in die Anode rückgeführt. Dies erfolgt über jenen Weg, über welchen das Gemisch ausgetragen wurde. Sobald der gesamte Wasserstoff aus dem Tank rückgeführt wurde und der in der Anode vorhanden gewesene Wasserstoff vollständig verbraucht wurde, wird der Anode wieder Wasserstoff zugeführt, sprich die Wasserstoffzuführung wieder geöffnet. Die Regelung der Zuführung erfolgt dabei durch einen mechanischen Druckregler.

Nachteilig ist hierbei, dass auf diese Art der Rückführung nicht alle Zellen der Brennstoffzelle gleichmäßig mit Wasserstoff. versorgt werden, wodurch diese nicht die maximal mögliche Zellspannung bereit stellen. Dadurch wird der Wirkungsgrad des Brennstoffzellensystems reduziert.

Ebenso ist nachteilig, dass die. Anode erst wieder mit Wasserstoff versorgt wird, wenn der gesamte Wasserstoff aus dem Tank rückgeführt wurde und der in der Anode vorhanden gewesene Wasserstoff vollständig verbraucht wurde. Hierbei kann es zu einem Leerlauf führen, indem die Anode nicht mit Wasserstoff versorgt wird, welcher die Lebensdauer der Brennstoffzelle verkürzt.

Die US 5 366 818 A beschreibt ein Verfahren, bei dem aus der Brennstoffzelle ausgetragener Wasserstoff in die Zuführung des Wasserstoffs rückgeführt wird. Dies erfolgt derart, dass ein aus der Brennstoffzelle ausgetragenes Gemisch (Wasserstoff, Wasser und Inertgase) in einem Trennbehälter gesammelt wird. Im Trennbehälter wird insbesondere der Wasserstoff und das Wasser getrennt und der Wasserstoff über einen Kompressor und einen Deionicierfilter dem reinen Wasserstoff in der Zuführung beigemischt.

Nachteilig ist hierbei, dass die Rezirkulation des Wasserstoffs über einen Kompressor und einen Deionisierfilter erfolgt. Insbesondere verschlechtert der Kompressor den Wirkungsgrad des Brennstoffzellensystems, da dieser einen Stromverbraucher darstellt. Der Deionisierfilter in der Rezirkulationsleitung wirkt sich insofern negativ aus, da dieser einen hohen Strömungswiderstand darstellt. Um diesen auszugleichen, müsste die Leistung des Kompressors erhöht werden, wodurch der Wirkungsgrad weiter verschlechtert wird.

Ebenso ist nachteilig, dass der Kompressor und der Deionisierfilter einen hohen Wartungsaufwand erfordern, welcher die Betriebskosten des Brennstoffzellensystems erhöht.

Die US 2004/0229087 A1 betrifft ein Verfahren zur Befeuchtung einer Brennstoffzelle, wobei der Anode über eine Zuführ-Druckregeleinheit Wasserstoff zugeführt wird und über eine Austrag-Druckregeleinheit periodisch Abgas und Kondensat in einem Sammelbehälter gesammelt wird. Dabei sind zwei Expansionsreservoirs zur Belieferung mit feuchtem Anodenabgas vorgesehen.

Die Aufgabe der Erfindung besteht daher in der Schaffung eines oben genannten Verfahrens und einer oben genannten Brennstoffzelle, mit welchem die Rückführung des Wasserstoffs in die Brennstoffzelle mit minimalem Stromverbrauch durchgeführt wird und mit dem der maximal mögliche Wirkungsgrad des Brennstoffzellensystems erreicht wird.

Die Aufgabe der Erfindung wird durch ein oben genanntes Druckregelverfahren gelöst, wobei im Normalbetrieb der Brennstoffzelle der Druck in der Anode auf einen Sollwert und der Druck im Sammelbehälter auf einen gegenüber dem Sollwert des Drucks in der Anode geringeren Sollwert eingestellt wird, und dass zum periodischen Austragen des Gemischs in einem Austrag-Zyklus die Austrag-Druckregeleinheit geöffnet wird und das Gemisch über die Ableitung in den Sammelbehälter, welcher einen geringeren Druck als der Druck in der Zuführung des Wasserstoffs aufweist, befördert wird, wobei mit steigender Menge des Gemisches im Wesentlichen der Druck im Sammelbehälter ansteigt und an den Druck in der Zuführung des Wasserstoffs angepasst wird, worauf anschließend bei kleiner werdender Druckdifferenz zwischen Sammelbehälter und Anode die Austrag-Druckregeleinheit geschlossen und die Zuführ-Druckregeleinheit und die Rückführ-Druckregeleinheit derart geregelt wird, dass durch den Eigenverbrauch der Anode der Druck im Sammelbehälter, bis auf den Sollwert für den Druck im Sammelbehälter und/oder einen eingestellten Schwellwert für den Druck in der Anode abgesenkt wird, worauf die Rückführ-Druckregeleinheit und die Zuführ-Druckregeleinheit derart geregelt werden, bis der Druck in der Anode den Sollwert des Normalbetriebs erreicht und der für den Austrag-Zyklus erforderliche Druckunterschied zwischen Anode und Sammelbehälter wieder hergestellt wird. Vorteilhaft ist hierbei, dass dadurch der Wirkungsgrad des Brennstoffzellensystems um bis zu fünf Prozent gesteigert werden kann. Dies wird derart erreicht, indem die Rückführung des brennbaren Gasanteils aus dem Gemisch im Sammelbehälter mit sehr geringem zusätzlichem Stromverbrauch, also mit der erfindungsgemäßen Druckregelung, durchgeführt wird. Somit wird in vorteilhafter Weise der erhöhte Wirkungsgrad durch die entsprechenden Druckunterschiede zwischen der Anode und dem Sammelbehälter erreicht. Durch die Rückführung wird der Wasserstoff des Gasanteils aus dem Sammelbehälter in der Anode verbraucht und in Strom umgewandelt, wodurch der Wasserstoffverbrauch im Allgemeinen gesenkt wird. Dies wirkt sich positiv auf den Wirkungsgrad des Brennstoffzellensystems aus, indem dieser erhöht wird. Durch den Sammelbehälter kann weiters eine größere Menge Gemisch aus der Anode ausgetragen werden, ohne den wertvollen Wasserstoff zu verlieren und somit den Wirkungsgrad zu senken. Ebenso wird mit der größeren Menge an Gemisch auch eine größere Menge an Wasser von der Anode ausgebracht, wodurch die Zellspannung nahezu ständig auf ihrem maximalen Wert gehalten wird und somit der Wirkungsgrad hoch bleibt. Durch die Druckregelung werden keine zusätzlichen Verbraucher, wie beispielsweise eine Wasserstoffpumpe für die Rückführung, benötigt, die den Wirkungsgrad des Brennstoffzellensystems reduzieren würden.

Durch die Maßnahmen der Ansprüche 2 und 3 wird in vorteilhafter Weise erreicht, dass die maximale Zellenspannung nahezu ständig während des Betriebs der Brennstoffzelle gewährleistet wird, wodurch der Wirkungsgrad dementsprechend erhöht wird.

In vorteilhafter Weise wird gemäß den Ansprüchen 4 und 5 erreicht, dass durch das Austragen des Gemischs der Wirkungsgrad des Brennstoffzellensystems nicht verschlechtert wird.

Vorteilhaft ist auch nach Anspruch 6 bis 8, dass dadurch die Rückführung bzw. die Rezirkulation des Gasanteils aus dem Sammelbehälter lediglich über den Druckausgleich durchgeführt werden kann. Somit wird in vorteilhafter Weise die wartungsintensive Wasserstoffzirkulationspumpe ersetzt.

Durch die Maßnahmen des Anspruchs 9 wird in vorteilhafter Weise erreicht, dass dadurch der Druck im Sammelbehälter reduziert wird, wodurch für den folgenden Austrag-Zyklus der erforderliche Druckunterschied zwischen dem Sammelbehälter und in der Zuführung des Wasserstoffs gewährleistet wird.

In vorteilhafter Weise wird gemäß dem Anspruch 10 erreicht, dass durch die fehlende bzw. verringerte Versorgung mit Wasserstoff über die Zuführ-Druckregeleinheit der Druck in der Anode sinkt, wodurch die Rückführung aufgrund des Druckunterschiedes zwischen Sammelbehälter und Anode ermöglicht wird. Ebenso ist von Vorteil, dass die Versorgung der Anode mit Wasserstoff nicht unterbrochen wird bzw. der erforderliche Wasserstoff kontinuierlich zugeführt wird.

Vorteilhaft ist auch nach Anspruch 11, dass durch die geringfügige Versorgung mit Wasserstoff der Druck in der Anode sinkt, wodurch die Rückführung aufgrund des Druckunterschiedes zwischen Sammelbehälter und Anode ermöglicht wird. Ebenso ist von Vorteil, dass gegebenenfalls die Anode zusätzlich zu der Versorgung aus dem Sammelbehälter mit Wasserstoff versogt werden kann. Dadurch wird die Anode mit der erforderlichen Menge an Wasserstoff garantiert versorgt und der Wirkungsgrad des Brennstoffzellensystems wird in jedem Betriebszustand konstant gehalten.

Durch die Maßnahmen der Ansprüche 12 und 13 wird in vorteilhafter Weise erreicht, dass dadurch der für die Rückführung des Gasanteils aus dem Sammelbehälter erforderliche Druckunterschied zwischen dem Sammelbehälter und in der Zuführung des Wasserstoffs hergestellt wird. Ebenso wird dadurch in vorteilhafter Weise eine lückenlose Versorgung der Anode mit Wasserstoff gewährleistet, wodurch der Wirkungsgrad des Brennstoffzellensystems hoch gehalten wird.

In vorteilhafter Weise wird gemäß dem Anspruch 16 erreicht, dass durch den konstanten Druck die Spannung der einzelnen Zellen der Brennstoffzelle auf ihrem maximalen Wert konstant gehalten wird, wodurch der Wirkungsgrad verbessert wird.

Vorteilhaft ist auch nach Anspruch 17, dass trotz der Druckänderungen der Wirkungsgrad des Brennstoffzellensystems in jedem Betriebszustand konstant gehalten wird.

Durch die Maßnahmen gemäß Anspruch 18 wird in vorteilhafter Weise erreicht, dass die Fließrichtung des Wasserstoffs durch die Anode beibehalten wird, wodurch die Austragung des Kondensats verbessert wird.

In vorteilhafter Weise wird gemäß dem Anspruch 19 erreicht, dass das Austragen des Gemischs und die Rückführung des Wasserstoffs aus dem Sammelbehälter in die Anode über eine Leitung und eine Druckregeleinheit durchgeführt wird.

Vorteilhaft ist auch nach Anspruch 20, dass dadurch der Wasserstoffanteil im Kondensat so gering wird, dass lediglich ein unbedenklicher Prozentsatz an Wasserstoffemissionen an die Umgebung abgegeben wird. Dies erfolgt in vorteilhafter Weise ohne Einsatz zusätzlicher Komponenten, wie zum Beispiel einem katalytischen Brenner, wodurch aufwändige Ex-Schutzmaßnahmen vermieden werden.

Durch die Maßnahmen gemäß Anspruch 21 wird in vorteilhafter Weise erreicht, dass die Kathode der Brennstoffzelle befeuchtet wird, wodurch der Wirkungsgrad verbessert wird. Ebenso ist vorteilhaft, dass der Wasserstoffanteil des Kondensats auf einer Katalysatorschicht in der Kathode reagiert, wodurch dieser mit Sauerstoff oxidiert wird. Somit sind keine aufwändigen zusätzlichen Maßnahmen zur Behandlung des emittierten Wasserstoffs, wie beispielsweise durch katalytische Oxidation in einem katalytischen Brenner oder Verdünnung mit Luft vor dem Abführen an die Umgebung, erforderlich.

In vorteilhafter Weise wird gemäß dem Anspruch 22 erreicht, dass dadurch die Beimischung des Kondensats in die Kathodenzuluft zur Kathodenluftbefeuchtung ermöglicht wird.

Vorteilhaft ist auch nach Anspruch 23, dass dies durch den geringen Wasserstoffanteil im Kondensat ermöglicht wird, wodurch keine aufwändigen nachfolgenden Maßnahmen zur Behandlung des emittierten Wasserstoffs, wie beispielsweise durch katalytische Oxidation oder Verdünnung mit Luft, erforderlich sind.

Die vorliegende Erfindung wird anhand der beigefügten, schematischen Zeichnungen näher erläutert.

Darin zeigen:
- Fig. 1: den schematischen Aufbau einer Brennstoffzelle;
- Fig. 2: den schematischen, vereinfachten Aufbau einer Brennstoffzelle für das Druckregelverfahren;
- Fig.: 3 die Druckverläufe in der Anode und im Sammelbehälter;

- Fig. 4: den Zustand der Zuführ-Druckregeleinheit;
- Fig. 5: den Zustand der Austrag-Druckregeleinheit; und
- Fig. 6: den Zustand der Rückführ-Druckregeleinheit.

Einführend wird festgehalten, dass gleiche Teile des Ausführungsbeispiels mit gleichen Bezugszeichen versehen werden.

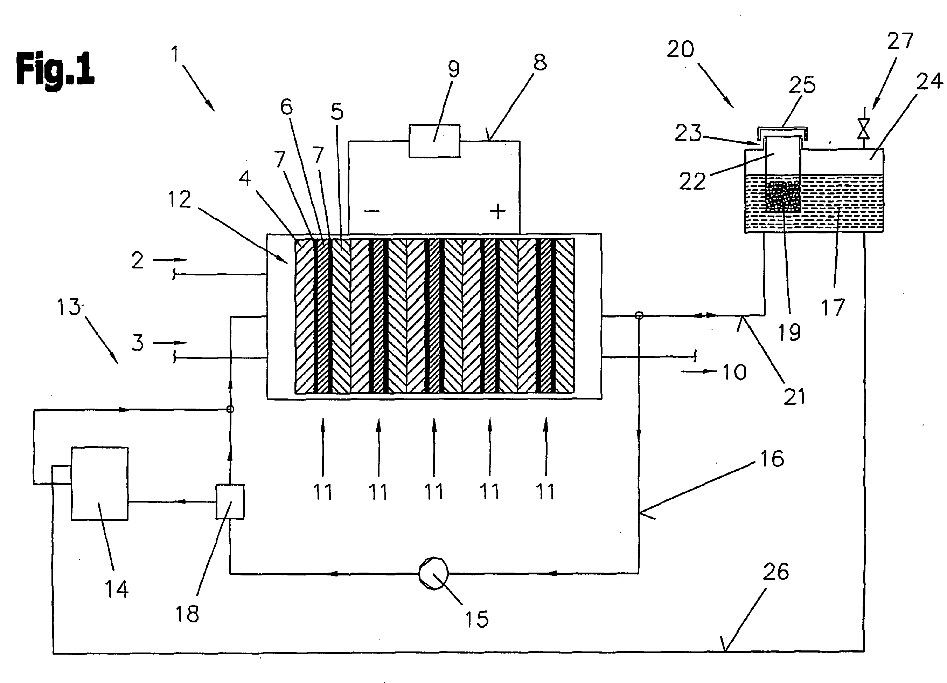

In Fig. 1 ist eine Brennstoffzelle 1 zur Erzeugung von Strom aus Wasserstoff 2 und Sauerstoff 3 bzw. Luft dargestellt.

Brennstoffzellen 1 sind elektrochemische Stromerzeuger, die direkt aus einer chemischen Reaktion elektrischen Strom erzeugen. Dies erfolgt durch Umkehrung der elektrolytischen Zersetzung von Wasser, bei der durch einen Stromfluss die Gase Wasserstoff 2 und Sauerstoff 3 gebildet werden.

In der Brennstoffzelle 1 reagiert also Wasserstoff 2 mit Sauerstoff 3, wodurch Strom erzeugt wird. Hierzu wird an einer Anode 4 Wasserstoff 2 und an einer Kathode 5 Sauerstoff 3 zugeführt, wobei die Anode 4 und die Kathode 5 durch einen Elektrolyt 6 getrennt sind. Des weiteren sind die Anode 4 und die Kathode 5 an der Seite zum Elektrolyt 6 mit einem Katalysator 7, meist aus Platin, beschichtet. Dadurch kann der Wasserstoff 2 mit dem Sauerstoff 3 reagieren, wobei dies in zwei getrennten Einzelreaktionen an den beiden Elektroden, der Anode 4 und der Kathode 5, erfolgt.

Der Anode 4 wird Wasserstoff 2 zugeführt, welcher am Katalysator 7 reagiert und sich je ein Wasserstoffmolekül in zwei Wasserstoffatome spaltet. Ein Wasserstoffatom weist zwei Bestandteile, ein negativ geladenes Elektron und ein positiv geladenes Proton, auf. Jedes Wasserstoffatom gibt sein Elektron ab. Die positiv geladenen.Protonen diffundieren durch den Elektrolyt 6, welcher für die negativ geladenen Elektronen undurchlässig ist, zur Kathode 5.

An der Kathode 5 wird zeitgleich zum Wasserstoff 2 an der Anode 4 Sauerstoff 3 zugeführt. Die Sauerstoffmoleküle reagieren am Katalysator 7 und teilen sich jeweils in zwei Sauerstoffatome, welche sich an der Kathode 5 ablagern.

Somit sind an der Kathode 5 die positiv geladenen Protonen des Wasserstoffs 2 sowie die Sauerstoffatome, und an der Anode 4 die negativ geladenen Elektronen des Wasserstoffs 2 abgelagert. Dadurch herrscht an der Kathode 5 ein so genannter Elektronenmangel und an der Anode 4 ein so genannter Elektronenüberschuss. Daraus resultiert an der Anode 4 eine negative und an der Kathode 5 eine positive Ladung. Die Anode 4 entpricht also einem Minuspol (-) und die Kathode 5 einem Pluspol (+).

Verbindet man nun die Anode 4 und die Kathode 5 mit einem elektrischen Leiter 8, so wandern die Elektronen aufgrund des Potenzialunterschiedes über den elektrischen Leiter 8 von der Anode 4 zur Kathode 5. Es fließt also elektrischer Gleichstrom über einen an der Leitung 8 angeschlossenen Verbraucher 9. Der Verbraucher 9 kann auch beispielsweise durch eine Batterie, die den produzierten Strom speichert, oder einen Wechselrichter, welcher den produzierten Gleichstrom in Wechselstrom umwandelt, gebildet sein.

Zwei Elektronen, welche über den elektrischen Leiter 8 von der Anode 4 zur Kathode 5 gewandert sind, werden jeweils von einem Sauerstoffatom in der Kathode 5 aufgenommen und werden zu zweifach negativ geladenen Sauerstoff-Ionen. Diese Sauerstoff-Ionen vereinigen sich mit den positiv geladenen Protonen des Wasserstoffs 2, welche durch den Elektrolyt 6 von der Anode 4 auf die Kathode 5 diffundiert sind, zu Wasser 10. Das Wasser 10 wird als so genanntes Reaktionsendprodukt an der Kathode 5 ausgeschieden.

In einer Zelle 11 der Brennstoffzelle 1 reagiert also Wasserstoff 2 mit Sauerstoff 3, wodurch Strom erzeugt wird. Eine Zelle 11 wird durch Anode 4, Kathode 5, Elektrolyt 6 und Katalysator 7 gebildet. Eine Verbindung mehrerer Zellen 11 in einer Reihenschaltung wird im Allgemeinen als Stack 12 bezeichnet.

Durch die Reaktion von Wasserstoff 2 mit Sauerstoff 3 in den einzelnen Zellen 11 eines Stacks 12 entsteht Wärme, die abgeführt werden muss. Dies erfolgt über ein Kühlsystem 13, das in seiner einfachsten Form aus einem Kühler 14, einer Pumpe 15 und einem Kühlkreislauf 16 besteht. Dabei pumpt die Pumpe 15 ein im Kühlkreislauf 16 befindliches Kühlmittel 17 durch den Stack 12 der Brennstoffzelle 1, beispielsweise in die Richtung gemäß den pfeilen. Dadurch entzieht das Kühlmittel 17 dem Stack 12 die Wärme, indem die Wärme durch das Kühlmittel 17 aufgenommen wird. Der Kühler 14 im Kühlkreislauf 16 entzieht wiederum dem Kühlmittel 17 die Wärme und gibt diese an die Umgebungsluft ab, so dass das Kühlmittel 17 erneut dem Stack 12 die Wärme entziehen kann. Der Kühlkreislauf 16 kann auch derart geregelt sein, dass das Kühlmittel 17 nur dann den Kühler 14 durchströmt, wenn das Kühlmittel 17 eine gewisse Temperatur aufweist. Diese Regelung erfolgt dementsprechend über ein Thermostat 18.

Da das Kühlsystem 13 einen Bestandteil der Brennstoffzelle 1 bildet, ist es den Spannungen, welche von den Zellen 11 erzeugt werden, ausgesetzt. Somit ist es wichtig, dass kein nennenswerter Stromfluss zwischen den Zellen 11 durch das Kühlmittel 17 auftritt. Als Kühlmittel 17 wird daher beispielsweise voll entsalztes Wasser (VE-Wasser) oder ein Gemisch aus Ethylenglykol und Wasser mit geringer elektrischer Leitfähigkeit verwendet.

Die elektrische Leitfähigkeit des Kühlmittels 17 wird durch den Einsatz eines Deionisierharzes 19, welches beispielsweise aus basischem Anionenharz oder Mischbettharz besteht, reduziert. Das Deionisierharz 19 bewirkt, dass in das Kühlmittel 17 durch diverse Vorgänge (Korrosion, Oxidation,...) abgegebene elektrisch leitende Ionen (Anionen und Kationen) absorbiert werden. Somit kann die Leitfähigkeit des Kühlmittels 17 bevorzugt unter 5 µS/cm gehalten werden, wodurch parasitäre Ströme, die den Wirkungsgrad verschlechtern würden, und Nebenreaktionen, die Korrosion im Kühlsystem 13 verursachen würden, vermieden werden. Das Deionisierharz 19 kann in einen Ausgleichsbehälter 20 integriert werden, und der Ausgleichsbehälter 20 über eine Leitung 21 mit dem Kühlkreislauf 16 verbunden werden. Somit ist das Deionisierharz 19 nicht direkt in den Kühlkreislauf 16 integriert, wodurch dieses auch keinen hohen Strömungswiderstand für das Kühlmittel 17 bewirkt. Dennoch wird die Leitfähigkeit des Kühlmittels 17 kontinuierlich gering gehalten. Dies erfolgt durch Diffusionsvorgänge und aufgrund von Konzentrationsunterschieden zwischen dem Kühlmittel 17 im Ausgleichsbehälter 20 und dem Kühlmittel 17 im Kühlkreislauf 16. Ebenso kann dies durch eine Entgasungsleitung 26 unterstützt werden.

Bevorzugt ist das Deionisierharz 19 in einem Behälter 22 bzw. in einem Sack oder Säckchen aus perforiertem Material angeordnet, welcher durch eine Einfüllöffnung 23 des Ausgleichsbehälters 20 in einen Innenraum 24 des Ausgleichsbehälters 20 eingeführt wird. Vorzugsweise kann die Einfüllöffnung 23 mit einem Schraubverschluss 25 verschlossen werden. Somit kann auf einfache Weise das Deionisierharz 19 gegebenenfalls während des Betriebs der Brennstoffzelle 1 ohne Unterbrechung der Kühlung gewechselt oder nachgefüllt werden. Des Weiteren weist der Ausgleichsbehälter 20 eine Überdrucksicherungseinrichtung 27 oder eine Belüftungseinrichtung 27, sprich ein Überdruck- bzw. Überströmventil, auf. Durch ein derartiges Kühlsystem 13 wird einerseits die Lebensdauer des Kühlmittels 17 wesentlich verlängert und andererseits kann die Temperatur der Zellen 11 konstant gehalten werden, wodurch ein optimaler Betrieb der Brennstoffzelle 1 gewährleistet wird.

Beim realen Betrieb einer Brennstoffzelle 1 kann der an der Anode 4 zugeführte Wasserstoff 2 nicht restlos verbraucht werden, da Sauerstoff 3 von der Kathode 5 durch den Elektrolyt 6 bzw. die Elektrolytmembran 6 zur Anode 4 diffundiert und dort mit dem Wasserstoff 2 zu Wasser 10 reagiert. Hauptsächlich wird dies durch Konzentrations- und Druckgradienten zwischen Anode 4 und Kathode 5, sowie durch eine sehr geringe Schichtdicke (<100µm) der verwendeten Elektrolytmembranen 6 bewirkt. Dementsprechend diffundiert ebenso Wasserstoff 2 durch die Membran 6 zur Kathode 5 und Wasser 10 wird gebildet.

Grundsätzlich dient das an Anode 4 und Kathode 5 entstehende Wasser 10 zu deren Befeuchtung. Da das Wasser 10 jedoch kontinuierlich durch die Reaktion von Wasserstoff 2 und Sauerstoff 3 entsteht, sammelt sich dieses an den Elektroden an und senkt die Zellspannung. Insbesondere wirkt sich dies an der Anode 4 äußerst negativ aus, da beim Entfernen des Wassers 10 auch stets ein Teil des an der Anode 4 befindlichen Wasserstoffs 2 entfernt wird. Dadurch wird der Wirkungsgrad des Brennstoffzellensystems entsprechend gesenkt. An der Kathode 5 kann hingegen das überschüssige Wasser 10 bedenkenlos mit der Reaktionsluft entfernt werden.

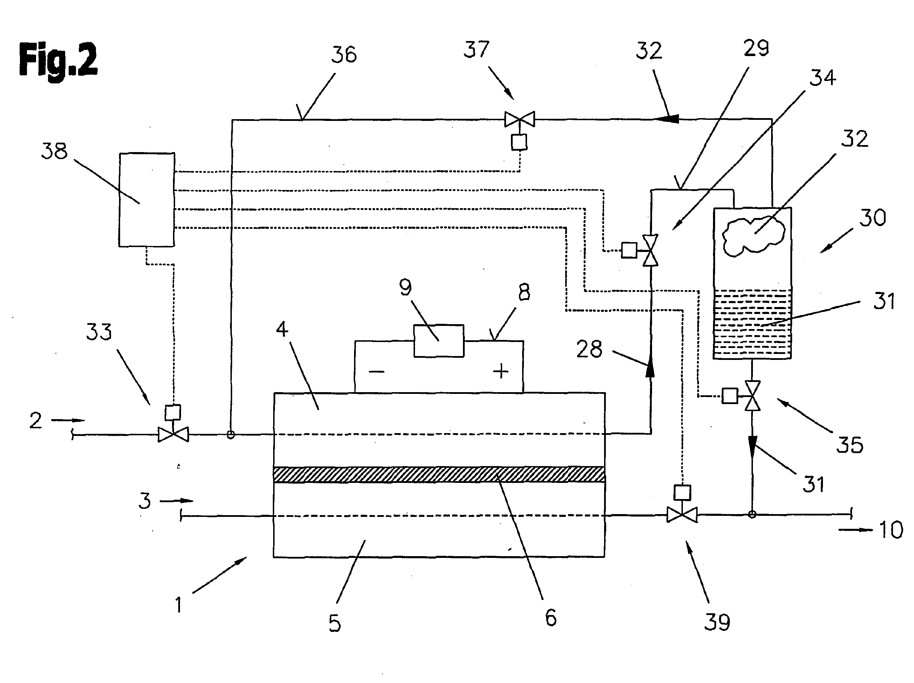

Das Austragen von Wasser von der Anode 4 erfolgt derart, dass das Gemisch 28 aus Wasser 10, Inertgasen und einem Teil Wasserstoff 2 über eine entsprechende Ableitung 29 in einen Sammelbehälter 30 befördert wird, wie anhand Fig. 2 dargestellt wird. Im Sammelbehälter 30 sammelt sich das Wasser 10 und ein Teil der Inertgase als so genanntes Kondensat 31 am Boden und der restliche Teil der Inertgase sowie der Wasserstoff 2, als Gasanteil 32, im oberen Bereich an. Aus dem Sammelbehälter 30 kann insbesondere der Wasserstoff 2 an die Anode 4 der Brennstoffzelle 1 rückgeführt werden. Dies kann beispielsweise gemäß der aus der US 5 366 818 A bekannten Art erfolgen. Hierbei wird jedoch der Wirkungsgrad nicht wesentlich verbessert, da für die Rückführung insbesondere eine Pumpe erforderlich ist, welche den Wirkungsgrad verschlechtert.

Erfindungsgemäß ist nun vorgesehen, dass das Austragen und Rückführen des Wasserstoffs 2 durch ein Druckregelverfahren erfolgt, so dass der Wirkungsgrad des Brennstoffzellensystems wesentlich verbessert wird. Dies wird erreicht, indem nur Komponenten mit sehr geringem Stromverbrauch eingesetzt werden.

Das erfindungsgemäße Druckregelverfahren wird nun anhand der Fig. 2 bis Fig. 6 beschrieben.

In Fig. 2 ist der erforderliche Aufbau für das erfindungsgemäße Druckregelverfahren dargestellt. Der Wasserstoff 2 wird über eine Zuführ-Druckregeleinheit 33 der Brennstoffzelle 1 bzw, der Anode 4 des Stacks 12 zugeführt. Damit das Wasser 10 und die Inertgase aus der Anode 4 ausgetragen werden können, ist eine Ableitung 29 entsprechend an der Anode 4 angeordnet. Die Ableitung 29 verbindet die Anode 4 mit dem Sammelbehälter 30. Das Austragen des Gemischs 28 über die Ableitung 29 wird über eine Austrag-Druckregeleinheit 34 entsprechend geregelt. Bevorzugt wird das Gemisch 28 über die Ableitung 29 in den oberen Bereich des Sammelbehälters 30 eingefüllt. Somit kann sich in einfacher Weise das Kondensat 31 am Boden sowie der leichtere Gasanteil 32 des Gemischs 28 im oberen Bereich des Sammelbehälters 30 sammeln.

Nach Erreichen einer gewissen Menge muss das Kondensat 31 aus dem Sammelbehälter 30 abgeführt werden, so dass für nachkommendes Gemisch 28 ausreichend Platz vorhanden ist. Das Abführen des Kondensats 31 erfolgt durch Drainage über eine Kondensat-Druckregeleinheit 35 am Boden des Sammelbehälters 30.

Im Gegensatz zum Kondensat 31 wird der Gasanteil 32 aus dem oberen Bereich des Sammelbehälters 30 entnommen und bevorzugt an die Zuführung des Wasserstoffs 2, vorzugsweise zwischen der Zuführ-Druckregeleinheit 33 und der Anode 4, rückgeführt. Dies erfolgt über eine entsprechende Rückführleitung 36 und eine Rückführ-Druckregeleinheit 37.

Zur Durchführung des erfindungsgemäßen Druckregelverfahrens sind die entsprechenden Druckregeleinheiten 33, 34, 35, 37 mit einer Steuerung 38 verbunden, so dass diese dementsprechend angesteuert bzw. geregelt werden können.

Selbstverständlich kann die Steuerung 38 noch weitere Druckregeleinheiten, welche für den Betrieb der Brennstoffzelle 1 erforderlich sind, wie beispielsweise eine Abluftbruckregeleinheit 39, ansteuern bzw. regeln. Bevorzugt ist die Steuerung 38 auch mit entsprechenden Sensoren (nicht dargestellt) verbunden, aufgrund derer das Druckregelverfahren durchgeführt wird.

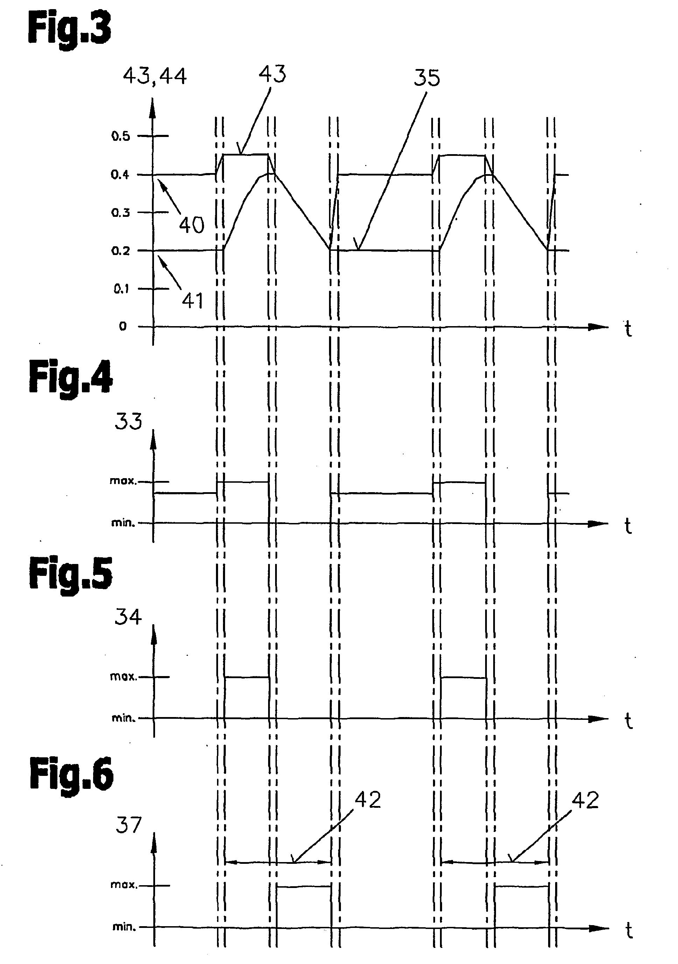

In Fig. 3 sind die Druckverläufe in der Zuführung des Wasserstoffs 2, welcher im Wesentlichen dem Druck in der Anode 4 entspricht, und im Sammelbehälter 30 entsprechend dem erfindungsgemäßen Druckregelverfahren in Abhängigkeit der Zeit t dargestellt. Zugehörig zu den Druckverläufen gemäß Fig. 3 sind in den Fig. 4 bis 6 die Zustände der entsprechenden Druckregeleinheiten über die Zeit t dargestellt. Hierbei entspricht der Zustand der jeweiligen Öffnung der jeweiligen Druckregeleinheit. Dies ist entsprechend mit Minimum (min.) und Maximum (max.) dargestellt. Fig. 4 zeigt den jeweiligen Zustand bzw. Druck-Sollwert der Zuführ-Druckregeleinheit 33, Fig. 5 jenen der Austrag-Druckregeleinheit 34 und Fig. 6 jenen der Rückführ-Druckregeleinheit 37.

Während des normalen Betriebs der Brennstoffzelle 1 beträgt der Druck an der Anode 4 entsprechend dessen Sollwert 40, bevorzugt im Bereich um 0,4 bar. Entsprechend ist der Druck im Sammelbehälter 30 geringer als der Druck an der Anode 4, wobei der Druck im normalen Betrieb auf einen Sollwert 41 im Bereich um 0,2 bar eingestellt ist.

Somit ist der erforderliche Druckunterschied zwischen Anode 4 und dem Sammelbehälter 30 für das erfindungsgemäße Druckregelverfahren gegeben, so dass ein Austrag-Zyklus 42 durchgeführt werden kann. Während des Austrag-Zyklus 42 verändert sich der Druck 43 an der Anode 4 und der Druck 44 im Sammelbehälter 30 gemäß Fig. 3.

Bevor der Austrag-Zyklus 42 mit dem Öffnen der Austrag-Druckregeleinheit 34 gestartet wird, wird der Druck an der Anode 4 auf beispielsweise 0,45 bar angehoben (also im Wesentlichen mit dem Starten des Austrag-Zyklus 42). Ist dieser Druck erreicht, wird die Austrag-Druckregeleinheit 34 geöffnet. Dies führt dazu, dass das Gemisch 28 aus der Anode 4 über die Ableitung 29 in den Sammelbehälter 30 befördert wird, da der Druck im Sammelbehälter 30 ja nur 0,2 bar im Gegensatz zu 0,45 bar in der Anode 4 beträgt. Mit zunehmender Menge des Gemischs 28 im Sammelbehälter 30 steigt der Druck im Sammelbehälter 30 entsprechend an. Die Steigung des Druckanstiegs im Sammelbehälter 30 nimmt während der Austragung des Gemischs 28 ab. Je kleiner die Steigung ist, umso kleiner ist auch der Austragungseffekt. Deshalb wird die Austrag-Druckregeleinheit 34 geschlossen, wenn der Austragungseffekt aufgrund der immer kleiner werdenden Druckdifferenz zwischen Sammelbehälter 30 und Anode 4 zu klein wird. Beispielsweise erfolgt dies bei etwa 0,4 bar. Dieser Wert beruht in der Regel auf einem Erfahrungswert. Der Druck an der Anode 4 wird hingegen während der Austragung im Wesentlichen auf 0,45 bar konstant gehalten.

Mit dem Schließen der Austrag-Druckregeleinheit 34 wird im Wesentlichen auch die Zuführ-Druckregeleinheit 33 geschlossen und die Rückführ-Druckregeleinheit 37 geöffnet, wobei bevorzugt das Öffnen der Rückführ-Druckregeleinheit 37 eine gewisse Zeitdauer nach dem Schließen der Druckregeleinheiten 33, 34 erfolgt. Dies hat zur Folge, dass der Druck in der Anode 4 sinkt, da kein Wasserstoff 2 mehr zugeführt wird, jedoch weiterhin Wasserstoff 2 zur Stromerzeugung verbraucht wird. Somit ist der Druck im Sammelbehälter 30 höher als in der Anode 4, wodurch aufgrund des gegebenen Druckunterschiedes über die Rückführleitung 36 der Anode 4 der Gasanteil 32 zugeführt wird. Dadurch sinkt dementsprechend der Druck im Sammelbehälter 30, bis der Sollwert 41 erreicht ist. Im Wesentlichen sinkt der Druck an der Anode 4 gemäß dem Verlauf 44 im Sammelbehälter 30 während der Rückführung ab. Gemäß Fig. 3 sinkt der Druck an der Anode 4 auf etwa 0,2 bar. Dieser Druck entspricht einem einstellbaren Schwellwert, welcher für einen wirkungsvollen Betrieb der Brennstoffzelle 1 erforderlich ist. Dieser Schwellwert wird im Wesentlichen mit dem Schließen der Zuführ-Druckregeleinheit 33 von der Steuerung 38 eingestellt. Hierbei muss dieser Schwellwert derart eingestellt werden, dass nach dem Austrag-Zyklus 42 der erforderliche Druckunterschied zwischen Anode 4 und Sammelbehälter 30 gegeben ist. Mit dem Erreichen des Sollwerts 41 und des Schwellwerts wird die Rückführ-Druckregeleinheit 37 geschlossen und die Zuführ-Druckregeleinheit 33 geöffnet, so dass der Druck an der Anode 4 wieder den erforderlichen Sollwert 40 erreichen kann. Damit ist der erforderliche Druckunterschied zwischen Anode 4 und Sammelbehälter 30 für den so genannten Normalbetrieb der Brennstoffzelle 1 sowie für den nächsten folgenden Austrag-Zyklus 42 wieder hergestellt.

Ein derartiger Austrag-Zyklus 42 dauert in Abhängigkeit des aktuellen Wasserstoffverbrauchs etwa zwei bis zehn Sekunden und erfolgt erfindungsgemäß je nach dem Betriebszustand der Brennstoffzelle 1, insbesondere entsprechend der Zellspannung.

Somit wird durch das erfindungsgemäße Druckregelverfahren während der Austrag-Zyklen 42 das für die Befeuchtung der Anode 4 überschüssige Wasser 10 aus der Anode 4 ausgetragen, ohne den Wirkungsgrad des Brennstoffzellensystems negativ zu beeinflussen. Dies wird auch durch die Rückführung des Gasanteils 32 über die Rückführleitung 36 in die Zuführung des Wasserstoffs 2 unterstützt, da dadurch das Wasser 10 an der Anode 4 in Richtung der Ableitung 29 gedrängt wird. Somit kann das Wasser 10 einfach ausgetragen werden, so dass die Zellspannung nicht sinkt.

Damit während der Austrag-Zyklen 42 die Anode 4 ausreichend mit Wasserstoff 2 versorgt wird, kann über eine entsprechende Regelung der Zuführ-Druckregeleinheit 33 dem Gasanteil 32 Wasserstoff 2 beigemischt werden. Diese Regelung erfolgt beispielsweise derart, dass ein Sensor im Sammelbehälter 30 den Anteil des Wasserstoffs 2 im Gasanteil 32 misst, diesen entsprechend an die Steuerung 38 weitergibt, welche die Zuführ-Druckregeleinheit 33 entsprechend einstellt. Ebenso kann die Steuerung 38 beispielsweise auch die Zuführ-Druckregeleinheit 33 periodisch durch eine Zeitvorgabe auf Basis von Erfahrungswerten einstellen. Selbstverständlich ist mit einem derartigen Sensor im Sammelbehälter 30 auch die Möglichkeit gegeben, dass bei einem zu geringen Anteil von Wasserstoff 2 im Gasanteil 32 der Gasanteil 32 nicht rückgeführt, sondern an die Umgebungsluft abgegeben wird. Hierbei wird die Versorgung der Anode 4 mit Wasserstoff 2 im Austrag-Zyklus 42 nicht unterbrochen. Dadurch ist gewährleistet, dass der Druck im Sammelbehälter 30 für den folgenden Austrag-Zyklus 42 gesenkt ist und die Anode 4 mit Wasserstoff 2 versorgt wird.

Durch das Austragen des Gemischs 28 während der Austrag-Zyklen 42 sammelt sich eine entsprechende Menge von Kondensat 31 im Sammelbehälter 30 an. Dieses wird über die Kondensat-Druckregeleinheit 35 aus dem Sammelbehälter 30 ausgeschieden. Die Regelung der Kondensat-Druckregeleinheit 35 durch die Steuerung 38 erfolgt derart, dass genügend Platz für das beim nächsten Austrag-Zyklus 42 kommende Gemisch 28 vorhanden ist und der entsprechende Druck im Sammelbehälter 30 gegeben ist. Dadurch kann aufgrund des Druckunterschiedes zwischen der Anode 4 und dem Sammelbehälter 30 das erfindungsgemäße Druckregelverfahren durchgeführt werden. Selbstverständlich ist auch eine vollständige Entleerung des Sammelbehälters 30 zulässig, wodurch in vorteilhafter Weise auch der Anteil der Inertgase im Gasanteil 32 verringert wird. Das über die Kondensat-Druckregeleinheit 35 ausgeschiedene Kondensat 31 kann entsprechend dem Stand der Technik der Luftzuführung der Kathode 5, zur Befeuchtung der Kathode 5, oder direkt der Abluft, mit einem Teil Wasser 10, der Kathode 5 beigemischt werden.

Das erfindungsgemäße Druckregelverfahren erfolgt also aufgrund der Ansteuerung bzw. Regelung der entsprechenden Druckregeleinheiten 33, 34, 35, 37 über die Steuerung 38, so dass der erforderliche Druckunterschied zwischen der Anode 4 und dem Sammelbehälter 30 gegeben ist. Dabei ist bevorzugt die Austrag-Druckregeleinheit 34, die Rückführ-Druckregeleinheit 37 und die Kondensat-Druckregeleinheit 35 durch je ein Schaltventil und die Zuführ-Druckregeleinheit 33 durch ein Regelventil gebildet. Im einfachsten Fall kann die Rückführ-Druckregeleinheit 37 auch anstelle eines Schaltventils durch ein Rückschlagventil gebildet sein.

Selbstverständlich kann mit dem erfindungsgemäßen Druckregelverfahren die Rückführung auch über die Ableitung 29 durchgeführt werden. Hierbei hat die Ableitung 29 zusätzlich die Funktion der Rückführleitung 36, welche in diesem Fall entfällt, und die Austrag-Druckregeleinheit 34 zusätzlich die Funktion der Rückführ-Druckregeleinheit 37. Somit wird der Gasanteil 32 aus dem Sammelbehälter 30 nicht in die Zuführung des Wasserstoffs 2 rückgeleitet, sondern im Wesentlichen über die Ableitung 29 an die Anode 4 rückgeführt. Die Druckregelung gemäß den Fig. 3 bis Fig. 6 wird dabei nur in der Hinsicht abgeändert, indem anstelle des Öffnens der Rückführ-Druckregeleinheit 37 die Austrag-Druckregeleinheit 34 in die entgegengesetzte Richtung wie beim Austragen geöffnet wird.

## Patentansprüche

1. Verfahren zum Regeln des Drucks in einer Anode (4) einer Brennstoffzelle (1), wobei der Anode (4) über eine Zuführ-Druckregeleinheit (33) Wasserstoff (2) zugeführt wird, und der Kathode (5) Sauerstoff (3) oder Luft zugeführt wird, und über eine Ableitung (29) aus der Anode (4) über eine Austrag-Druckregeleinheit (34) periodisch ein Gemisch (28) aus einem Gasanteil (32) und einem Kondensat (31) ausgetragen und in einem Sammelbehälter (30) gesammelt und getrennt wird, und der Gasanteil (32) über eine Rückführleitung (36) mit einer Rückführ-Druckregeleinheit (37) an die Anode (4) rückgeführt wird, **dadurch gekennzeichnet, dass** im Normalbetrieb der Brennstoffzelle (1) der Druck in der Anode (4) auf einen Sollwert (40) und der Druck (44) im Sammelbehälter (30) auf einen gegenüber dem Sollwert (40) des Drucks in der Anode (4) geringeren Sollwert (41) eingestellt wird, und dass zum periodischen Austragen des Gemisches (28) in einem Austrag-Zyklus (42) die Austrag-Druckregeleinheit (34) geöffnet wird und das Gemisch (28) über die Ableitung (29) in den Sammelbehälter (30), welcher einen geringeren Druck als der Druck in der Zuführung des Wasserstoffes (2) aufweist, befördert wird, wobei mit steigender Menge des Gemischs (28) im Wesentlichen der Druck (44) im Sammelbehälter (30) ansteigt und an den Druck in der Zuführung des Wasserstoffes (2) angepasst wird, worauf anschließend bei kleiner werdender Druckdifferenz zwischen Sammelbehälter (30) und Anode (4) die Austrag-Druckregeleinheit (34) geschlossen und die Zuführ-Druckregeleinheit (33) und die Rückführ-Druckregeleinheit (37) derart geregelt wird, dass durch den Eigenverbrauch der Anode (4) der Druck (44) im Sammelbehälter (30) bis auf den Sollwert (41) für den Druck im Sammelbehälter (30) und/oder einen eingestellten Schwellwert für den Druck in der Anode (4) abgesenkt wird, worauf die Rückführ-Druckregeleinheit (37) und die Zuführ-Druckregeleinheit (33) derart geregelt werden, bis der Druck in der Anode (4) den Sollwert (40) des Normalbetriebs erreicht und der für den Austrag-Zyklus (42) erforderliche Druckunterschied zwischen Anode (4) und Sammelbehälter (30) wieder hergestellt wird.

2. Druckregelverfahren nach Anspruch 1, **dadurch gekennzeichnet, dass** der Austrag-Zyklus (42) in Abhängigkeit des Betriebszustandes der Brennstoffzelle (1) gestartet wird.

3. Druckregelverfahren nach Anspruch 2, **dadurch gekennzeichnet, dass** der Austrag-Zyklus (42) in Abhängigkeit der Zellenspannungen der Brennstoffzelle (1) gestartet wird.

4. Druckregelverfahren nach einem der Ansprüche 1 bis 3, **dadurch gekennzeichnet, dass** im Wesentlichen mit dem Start des Austrag-Zyklus (42) der Druck in der Zuführung des Wasserstoffs (2) an die Anode (4) erhöht wird.

5. Druckregelverfahren nach Anspruch 4, **dadurch gekennzeichnet, dass** der Druck vom eingestellten Sollwert (40) im Bereich um 0,4 bar auf den Bereich um 0,45 bar erhöht wird.

6. Druckregelverfahren nach Anspruch 4 oder 5, **dadurch gekennzeichnet, dass** mit dem Erreichen des erhöhten Drucks in der Zuführung des Wasserstoffs (2) die Austrag-Druckregeleinheit (34) zum Austragen des Gemischs (28) geöffnet wird.

7. Druckregelverfahren nach einem der Ansprüche 1 bis 6, **dadurch gekennzeichnet, dass** beim Austragen des Gemischs (28) der erhöhte Druck in der Zuführung des Wasserstoffs (2) beibehalten wird und der Druck (44) im Sammelbehälter (30) angehoben wird.

8. Druckregelverfahren nach Anspruch 7, **dadurch gekennzeichnet, dass** der Druck (44) im Sammelbehälter (30) von einem Sollwert (41) im Bereich um 0,2 bar auf den Bereich um 0,4 bar angehoben wird.

9. Druckregelverfahren nach einem der Ansprüche 1 bis 8, **dadurch gekennzeichnet, dass** im Wesentlichen mit dem Erreichen des erhöhten Drucks (44) im Sammelbehälter (30) die Austrag-Druckregeleinheit (34) und die Zuführ-Druckregeleinheit (33) geschlossen werden und die Rückführ-Druckregeleinheit (37) geöffnet wird.

10. Druckregelverfahren nach einem der Ansprüche 1 bis 9, **dadurch gekennzeichnet, dass** bei der Rückführung durch das Schließen der Zuführ-Druckregeleinheit (33) die Anode (4) über die Rückführleitung (36) mit Wasserstoff (2) versorgt wird, wobei der Druck (43) in der Anode (4) auf den Schwellwert, welcher im Wesentlichen dem Sollwert (41) des Drucks im Sammelbehälter (30) entspricht, abgesenkt wird.

11. Druckregelverfahren nach einem der Ansprüche 1 bis 9, **dadurch gekennzeichnet, dass** bei der Rückführung anstelle dem Schließen der Zuführ-Druckregeleinheit (33) der Druck in der Zuführung des Wasserstoffs (2) auf ein Minimum reduziert wird, und die Anode (4) zu einem geringen Teil über die Zuführung des Wasserstoffs (2) und großteils über die Rückführleitung (36) mit Wasserstoff (2) versorgt wird.

12. Druckregelverfahren nach einem der Ansprüche 1 bis 11, **dadurch gekennzeichnet, dass** bei der Rückführung der Druck (44) im Sammelbehälter (30) auf den Sollwert (41) des Drucks (44) im Sammelbehälter (30) im Bereich um 0,2 bar gesenkt wird.

13. Druckregelverfahren nach einem der Ansprüche 1 bis 12, **dadurch gekennzeichnet, dass** mit dem Erreichen des Sollwerts (41) des Drucks (44) im Sammelbehälter (30) die Rückführ-Druckregeleinheit (37) geschlossen und die Zuführ-Druckregeleinheit (33) derart geöffnet wird, dass der Druck in der Zuführung des Wasserstoffs (2) auf den Sollwert (40) im Bereich um 0,4 bar erhöht wird.

14. Druckregelverfahren nach einem der Ansprüche 1 bis 13, **dadurch gekennzeichnet, dass** mit dem Schließen der Rückführ-Druckregeleinheit (37) und dem Öffnen der Zuführ-Druckregeleinheit (33) der Austrag-Zyklus (42) beendet wird.

15. Druckregelverfahren nach einem der Ansprüche 1 bis 14, **dadurch gekennzeichnet, dass** der Austrag-Zyklus (42) innerhalb einer Dauer zwischen einer Sekunde und zehn Sekunden durchgeführt wird.

16. Druckregelverfahren nach einem der Ansprüche 1 bis 15, **dadurch gekennzeichnet, dass** zwischen den Austrag-Zyklen (42) der Druck in der Zuführung des Wasserstoffs (2) auf dessen Sollwert (40) und der Druck (44) im Sammelbehälter (30) auf dessen Sollwert (41) konstant gehalten wird.

17. Druckregelverfahren nach einem der Ansprüche 1 bis 16, **dadurch gekennzeichnet, dass** unabhängig von den Änderungen des Drucks die Funktionen der Brennstoffzelle (1) uneingeschränkt beibehalten werden.

18. Druckregelverfahren nach einem der Ansprüche 1 bis 17, **dadurch gekennzeichnet, dass** der Gasanteil (32) an die Zuführung des Wasserstoffs (2) an die Anode (4) rückgeführt wird.

19. Druckregelverfahren nach einem der Ansprüche 1 bis 17, **dadurch gekennzeichnet, dass** die Rückführung des Gasanteils (32) über die Ableitung (29), welche der Rückführleitung (36) entspricht, und die Austrag-Druckregeleinheit (34), welche der Rückführ-Druckregeleinheit (37) entspricht, durchgeführt wird.

20. Druckregelverfahren nach einem der Ansprüche 1 bis 19, **dadurch gekennzeichnet, dass** das Kondensat (31) nach etwa zehn bis zwanzig Austrag-Zyklen (42) periodisch aus dem Sammelbehälter (30) ausgetragen wird, wobei dies zwischen den Austrag-Zyklen (42) durchgeführt wird.

21. Druckregelverfahren nach einem der Ansprüche 1 bis 20, **dadurch gekennzeichnet, dass** das Kondensat (31) im Sammelbehälter (30) über eine Kondensat-Druckregeleinheit (35) der Sauerstoff (3)- oder Luftzuführung der Kathode (5) beigemischt wird.

22. Druckregelverfahren nach Anspruch 21, **dadurch gekennzeichnet, dass** der Druck in der Luftzuführung für einen Zeitraum der Beimischung des Kondensats (31) reduziert wird.

23. Druckregelverfahren nach einem der Ansprüche 1 bis 20, **dadurch gekennzeichnet, dass** das Kondensat (31) im Sammelbehälter (30) über eine Kondensat-Druckregeleinheit (35) einer Abluft einer Kathode (5) der Brennstoffzelle (1) beigemischt wird.

## Claims

1. A method for controlling the pressure in an anode (4) of a fuel cell (1), with hydrogen (2) being fed to the anode (4) via a feed-pressure control unit (33), and oxygen (3) or air being fed to the cathode (5), and a mixture (28), which consists of a gas portion (32) and a condensate (31), being periodically discharged from the anode (4) via a discharge line (29) via a discharge-pressure control unit (34) and collected and separated in a reservoir (30), and with the gas portion (32) being fed back to the anode (4) by a feedback-pressure control unit (37) via a feedback line (36), **characterized in that** the pressure in the anode (4) during normal operation of the fuel cell (1) is adjusted to a desired value (40), and the pressure (44) in the reservoir (30) is adjusted to a desired value (41) lower than the desired value (40) of the pressure in the anode (4), and that the discharge-pressure control unit (34) is opened for periodically discharging the mixture (28) in a discharge cycle (42), and that the mixture (28) is conveyed into the reservoir (30) via the discharge line (29), with the pressure prevailing in the reservoir (30) being lower than that in the feed means of hydrogen (2), wherein substantially the pressure (44) prevailing in the reservoir (30) increases when the amount of the mixture (28) is increasing, and is adapted to the pressure in the feed means of hydrogen (2), whereupon the discharge-pressure control unit (34) will be closed in case of a pressure difference between the reservoir (30) and the anode (4) becoming smaller, and the feed-pressure control unit (33) and a feedback-pressure control unit (37) will be controlled such that the pressure (44) prevailing in the reservoir (30) will be reduced due to the own pressure consumption of the anode (4) until the desired value (41) will be reached for the pressure in the reservoir (30) and/or a preset threshold value for the pressure in the anode (4) will be reached, whereupon the feedback-pressure control unit (37) and the feed-pressure control unit (33) will be controlled in this manner until the pressure in the anode (4) will reach the preset desired value (40) of the normal operation, and the pressure difference between the anode (4) and the reservoir (30) necessary for the discharge cycle (42) will be restored.

2. The pressure-control method according to claim 1, **characterized in that** the discharge cycle (42) is started as a function of the state of operation of the fuel cell (1).

3. The pressure-control method according to claim 2, **characterized in that** the discharge cycle (42) is started as a function of the cell voltages of the fuel cell (1).

4. The pressure-control method according to any one of claims 1 to 3, **characterized in that** substantially as soon as the discharge cycle (42) is started, the pressure prevailing in the feed means of hydrogen (2) to the anode (4) will be increased.

5. The pressure-control method according to claim 4, **characterized in that** the pressure is increased from a preset desired value (40) of in the range of about 0.4 bar to the range of about 0.45 bar.

6. The pressure-control method according to claim 4 or 5, **characterized in that** as soon as the increased pressure is achieved in the feed means of hydrogen (2), the discharge-pressure control unit (34) will be opened for discharging the mixture (28).

7. The pressure-control method according to any one of claims 1 to 6, **characterized in that** the increased pressure prevailing in the feed means of hydrogen (2) is maintained during discharging of the mixture (28), and that the pressure (44) prevailing in the reservoir (30) is increased.

8. The pressure-control method according to claim 7, **characterized in that** the pressure (44) prevailing in the reservoir (30) is increased from a desired value (41) of in the range of about 0.2 bar to the range of about 0.4 bar.

9. The pressure-control method according to any one of claims 1 to 8, **characterized in that** substantially as soon as the increased pressure (44) in the reservoir (30) is reached, the discharge-pressure control unit (34) and the feed-pressure control unit (33) will be closed and the feedback-pressure control unit (37) will be opened.

10. The pressure-control method according to any one of claims 1 to 9, **characterized in that** since the feed-pressure control unit (33) is closed during feedback, the anode (4) is supplied with hydrogen (2) via the feedback line (36), wherein the pressure (43) in the anode (4) is reduced to the threshold value which substantially corresponds to the desired value (41) of the pressure prevailing in the reservoir (30).

11. The pressure-control method according to any one of claims 1 to 9, **characterized in that** instead of closing the feed-pressure control unit (33) during feedback the pressure in the feed means of hydrogen (2) is reduced to a minimum value, and the anode (4) is supplied with hydrogen (2) to a small extent via the feed means of hydrogen (2) and to a large extent via the feedback line (36).

12. The pressure-control method according to any one of claims 1 to 11, **characterized in that** during feedback the pressure (44) prevailing in the reservoir (30) is reduced to the desired value (41) of the pressure (44) prevailing in the reservoir (30) which lies in the range of about 0.2 bar.

13. The pressure-control method according to any one of claims 1 to 12, **characterized in that** as soon as the desired value (41) of the pressure (44) prevailing in the reservoir (30) is reached, the feedback-pressure control unit (37) will be closed and the feed-pressure control unit (33) will be opened such that the pressure in the feed means of hydrogen (2) will be increased to the desired value (40) which lies in the range of about 0.4 bar.

14. The pressure-control method according to any one of claims 1 to 13, **characterized in that** as soon as the feedback-pressure control unit (37) is closed and the feed-pressure control unit (33) is opened, the discharge cycle (42) will be finished.

15. The pressure-control method according to any one of claims 1 to 14, **characterized in that** the discharge cycle (42) is effected within a period of between one second and ten seconds.

16. The pressure-control method according to any one of claims 1 to 15, **characterized in that** between the discharge cycles (42) the pressure in the feed means of hydrogen (2) is kept constant at the desired value (40) thereof and the pressure (44) prevailing in the reservoir (30) is kept constant at the desired value (41) thereof.

17. The pressure-control method according to any one of claims 1 to 16, **characterized in that** the functions of the fuel cell (1) will be completely maintained, irrespective of the changes in pressure.

18. The pressure-control method according to any one of claims 1 to 17, **characterized in that** the gas portion (32) is fed back to the feed means of hydrogen (2) to the anode (4).

19. The pressure-control method according to any one of claims 1 to 17, **characterized in that** the gas portion (32) is fed back via the discharge line (29), which corresponds to the feedback line (36), and via the discharge-pressure control unit (34), which corresponds to the feedback-pressure control unit (37).

20. The pressure-control method according to any one of claims 1 to 19, **characterized in that** after about ten to twenty discharge cycles (42) have been conducted, wherein the condensate (31) will be periodically discharged from the reservoir (30) between the discharge cycles (42).

21. The pressure-control method according to any one of claims 1 to 20, **characterized in that** the condensate (31) in the reservoir (30) is admixed to the oxygen(3)-feed or air-feed means of the cathode (5) via a condensate-pressure control unit (35).

22. The pressure-control method according to claim 21, **characterized in that** the pressure in the air-feed means is reduced for the period during which the condensate (31) is admixed.

23. The pressure-control method according to any one of claims 1 to 20, **characterized in that** the condensate (31) in the reservoir (30) is admixed to an exhaust air of a cathode (5) of the fuel cell (1) via a condensate-pressure control unit (35).

## Revendications

1. Procédé pour réguler la pression dans une anode (4) d'une pile à combustible (1), dans lequel, à travers une unité de régulation de pression d'arrivée (33), de l'hydrogène (2) est amené à l'anode (4) et de l'oxygène (3) ou de l'air est amené à la cathode (5), et à travers une dérivation (29) provenant de l'anode (4) en passant par une unité de régulation de pression d'extraction (34), un mélange (28) composé d'une fraction de gaz (32) et d'un condensat (31) est extrait périodiquement et recueilli et séparé dans un récipient collecteur (30), et la fraction de gaz (32) est recyclée vers l'anode (4) à travers une conduite de recyclage (36) avec une unité de régulation de pression de recyclage (37),
**caractérisé en ce qu'**en cours de fonctionnement normal de la pile à combustible (1), la pression dans l'anode (4) est réglée sur une valeur de consigne (40) et la pression (44) dans le récipient collecteur (30) est réglée sur une valeur de consigne inférieure (41) par rapport à la valeur de consigne (40) de la pression dans l'anode, et
**en ce que** pour l'extraction périodique du mélange (28) dans un cycle d'extraction (42), l'unité de régulation de pression d'extraction (34) est ouverte et le mélange (28) est transporté à travers la dérivation (29) dans le récipient collecteur (30) qui présente une pression inférieure à la pression dans l'arrivée de l'hydrogène (2),
dans lequel avec une quantité croissante du mélange (28), la pression (44) dans le récipient collecteur (30) augmente substantiellement et est ajustée à la pression dans l'arrivée de l'hydrogène (2), suite à quoi, lorsque la différence de pression diminue entre le récipient collecteur (30) et l'anode (4), l'unité de régulation de pression d'extraction (34) est fermée et l'unité de régulation de pression d'arrivée (33) et l'unité de régulation de pression de recyclage (37) sont régulées de telle sorte que la consommation propre de l'anode (4) diminue la pression (44) dans le récipient collecteur (30) jusqu'à la valeur de consigne (41) pour la pression dans le récipient collecteur (30) et/ou une valeur de seuil réglée pour la pression dans l'anode (4), suite à quoi, l'unité de régulation de pression de recyclage (37) et l'unité de régulation de pression d'arrivée (33) sont régulées jusqu'à ce que la pression dans l'anode (4) atteigne la valeur de consigne (40) du fonctionnement normal et la différence de pression nécessaire au cycle d'extraction (42) entre l'anode (4) et le récipient collecteur (30) soit rétablie.

2. Procédé de régulation de pression selon la revendication 1, **caractérisé en ce que** le cycle d'extraction (42) est lancé en fonction de l'état de fonctionnement de la pile à combustible (1).

3. Procédé de régulation de pression selon la revendication 2, **caractérisé en ce que** le cycle d'extraction (42) est lancé en fonction des tensions d'élément de la pile à combustible (1).

4. Procédé de régulation de pression selon l'une quelconque des revendications 1 à 3, **caractérisé en ce que** substantiellement avec le lancement du cycle d'extraction (42), la pression dans l'arrivée de l'hydrogène (2) vers l'anode (4) est augmentée.

5. Procédé de régulation de pression selon la revendication 4, **caractérisé en ce que** la pression est augmentée de la valeur de consigne réglée (40) dans la plage d'environ 0,4 bar à la plage d'environ 0,45 bar.

6. Procédé de régulation de pression selon la revendication 4 ou 5, **caractérisé en ce que** quand la pression augmentée est atteinte dans l'arrivée de l'hydrogène (2), l'unité de régulation de pression d'extraction (34) est ouverte pour l'extraction du mélange (28).

7. Procédé de régulation de pression selon l'une quelconque des revendications 1 à 6, **caractérisé en ce que** quand le mélange (28) est extrait, la pression augmentée dans l'arrivée de l'hydrogène (2) est maintenue et la pression (44) dans le récipient collecteur (30) est relevée.

8. Procédé de régulation de pression selon la revendication 7, **caractérisé en ce que** la pression (44) dans le récipient collecteur (30) est relevée à partir d'une valeur de consigne (41) dans la plage d'environ 0,2 bar à la plage d'environ 0,4 bar.

9. Procédé de régulation de pression selon l'une quelconque des revendications 1 à 8, **caractérisé en ce que** substantiellement quand la pression augmentée (44) est atteinte dans le récipient collecteur (30), l'unité de régulation de pression d'extraction (34) et l'unité de régulation de pression d'arrivée (33) sont fermées et l'unité de régulation de pression de recyclage (37) est ouverte.

10. Procédé de régulation de pression selon l'une quelconque des revendications 1 à 9, **caractérisé en ce que** lors du recyclage, par la fermeture de l'unité de régulation de pression d'arrivée (33), l'anode (4) est alimentée en hydrogène (2) par l'intermédiaire de la conduite de recyclage (36), dans lequel la pression (43) dans l'anode (4) est abaissée à la valeur de seuil qui correspond substantiellement à la valeur de consigne (41) de la pression dans le récipient collecteur (30).

11. Procédé de régulation de pression selon l'une quelconque des revendications 1 à 9, **caractérisé en ce que** lors du recyclage, au lieu de fermer l'unité de régulation de pression d'arrivée (33), la pression dans l'arrivée de l'hydrogène (2) est réduite à un minimum, et l'anode (4) est alimentée en hydrogène pour une petite partie à travers l'arrivée de l'hydrogène (2) et pour une grande partie à travers la conduite de recyclage (36).

12. Procédé de régulation de pression selon l'une quelconque des revendications 1 à 11, **caractérisé en ce que** lors du recyclage, la pression (44) dans le récipient collecteur (30) est abaissée à la valeur de consigne (41) de la pression (44) dans le récipient collecteur (30) dans la plage d'environ 0,2 bar.

13. Procédé de régulation de pression selon l'une quelconque des revendications 1 à 12, **caractérisé en ce que** quand la valeur de consigne (41) de la pression (44) dans le récipient collecteur (30) est atteinte, l'unité de régulation de pression de recyclage (37) est fermée et l'unité de régulation de pression d'arrivée (33) est ouverte de telle sorte que la pression dans l'arrivée de l'hydrogène (2) est augmentée à la valeur de consigne (40) dans la plage de 0,4 bar.

14. Procédé de régulation de pression selon l'une quelconque des revendications 1 à 13, **caractérisé en ce que** le cycle d'extraction (42) est terminé par la fermeture de l'unité de régulation de pression de recyclage (37) et l'ouverture de l'unité de régulation de pression d'arrivée (33).

15. Procédé de régulation de pression selon l'une quelconque des revendications 1 à 14, **caractérisé en ce que** le cycle d'extraction (42) est effectué dans un délai entre une seconde et dix secondes.

16. Procédé de régulation de pression selon l'une quelconque des revendications 1 à 15, **caractérisé en ce qu'**entre les cycles d'extraction (42), la pression dans l'arrivée de l'hydrogène (2) est maintenue à sa valeur de consigne (40) et la pression (44) dans le récipient collecteur (30) est maintenue constante à sa valeur de consigne (41).

17. Procédé de régulation de pression selon l'une quelconque des revendications 1 à 16, **caractérisé en ce qu'**indépendamment des modifications de la pression, les fonctions de la pile à combustible (1) sont préservées sans restriction.

18. Procédé de régulation de pression selon l'une quelconque des revendications 1 à 17, **caractérisé en ce que** la fraction de gaz (32) est recyclée par l'arrivée de l'hydrogène (2) vers l'anode (4).

19. Procédé de régulation de pression selon l'une quelconque des revendications 1 à 17, **caractérisé en ce que** le recyclage de la fraction de gaz (32) est effectué à travers la dérivation (29), qui correspond à la conduite de recyclage (36), et l'unité de régulation de pression d'extraction (34), qui correspond à l'unité de régulation de pression de recyclage (37).

20. Procédé de régulation de pression selon l'une quelconque des revendications 1 à 19, **caractérisé en ce que** le condensat (31) est extrait périodiquement du récipient collecteur (30) après environ dix à vingt cycles d'extraction (42), cette opération étant effectuée entre les cycles d'extraction (42).

21. Procédé de régulation de pression selon l'une quelconque des revendications 1 à 20, **caractérisé en ce que** le condensat (31) est mélangé dans le récipient collecteur (30) par l'intermédiaire d'une unité de régulation de pression de condensat (35) à l'arrivée d'oxygène (3) ou d'air de la cathode (5).

22. Procédé de régulation de pression selon la revendication 21, **caractérisé en ce que** la pression dans l'arrivée d'air est réduite pendant une période de temps de mélange du condensat (31).

23. Procédé de régulation de pression selon l'une quelconque des revendications 1 à 20, **caractérisé en ce que** le condensat (31) dans le récipient collecteur (30) est mélangé par l'intermédiaire d'une unité de régulation de pression de condensat (35) à l'air évacué d'une cathode (5) de la pile à combustible (1).
